# EUROPEAN PATENT SPECIFICATION

(11) **EP 2 893 771 B1**
(45) Date of publication and mention of the grant of the patent: **30.10.2019**
(21) Application number: 13834694.5
(22) Date of filing: 03.09.2013
(51) Int. Cl.: H05B 7/20, F27D 11/08, F27B 3/08, F27D 21/02, F27B 3/28, F27D 19/00, F27D 21/00, G01N 21/67

(54) **METHOD AND APPARATUS FOR MONITORING AN ELECTRIC ARC FURNACE**
VERFAHREN UND VORRICHTUNG ZUR ÜBERWACHUNG EINES ELEKTRISCHEN LICHTBOGENOFENS
PROCÉDÉ ET APPAREIL POUR CONTRÔLER UN FOUR À ARC ÉLECTRIQUE

(30) Priority: 10.09.2012 FI 20125935
(43) Date of publication of application: 15.07.2015
(73) Proprietor: Luxmet Oy, 90570 Oulu (FI)
(72) Inventor: AULA, Matti, FI-90570 Oulu (FI); ROININEN, Juha, FI-90570 Oulu (FI); LEPPÄNEN, Ahti, FI-90570 Oulu (FI)
(74) Representative: Kolster Oy Ab
(86) International application number: PCT/FI2013/050846
(87) International publication number: WO 2014/037614

(56) References cited:
- WO-A1-2012/123066
- GB-A- 867 973
- GB-A- 867 973
- JP-A- H0 817 573
- US-A- 4 435 818
- US-A- 4 435 818
- US-A- 4 766 318

## Description

### Field

The invention relates to an apparatus and a method for monitoring an electric arc furnace.

### Background

Analyzing the state of metal in an electric arc furnace is very important in order to control the process properly. In an offline method a sample of the metal is taken from the furnace and it is chemically analyzed. Such an analyzing method is very slow and it cannot be used to make rapid changes in the melting process. Patent document WO 2012123066 presents a method for ascertaining an operation and/or material parameter in an electric arc furnace and electric arc furnace.

Instead of a chemical method, an optical method can be used. In a prior art solution the furnace has a tube for letting light out. The light is then dispersed into a spectrum and the spectral lines characteristic to the substances in the furnace are then analyzed leading to a result similar to the chemical method. However, neither the chemical method nor the optical method gives all the necessary information to observe the state of the melting process and to control it. For example, vital information with respect to a moment of complete melting and to slag as well as its behavior is still missing in the prior art methods. Hence, there is a need for a better measurement for enabling a better control of the electric arc furnace.

### Brief description

An object of the invention is to provide an improved solution for monitoring an electric arc furnace.

According to an aspect of the present invention, there is provided an apparatus according to claim 1.

According to another aspect of the present invention, there is provided a method according to claim 15.

The invention provides advantages. Moment when all metal has molten, position of slag and/or foaming of slag may be monitored and detected.

### List of drawings

Embodiments of the present invention are described below, by way of example only, with reference to the accompanying drawings, in which
Figure 1 illustrates an example of configuration of measurement arrangement;
Figure 2 illustrates an example of forming optical bands of spectrum;
Figure 3 illustrates an example of a signal from cold material;
Figure 4 illustrates an example of a signal from a hot material;
Figure 5 illustrates of an example of a signal from an electric arc;
Figure 6 illustrates of an example of a signal from a hot material with a distinctive peak at about 590 nm;
Figure 7 illustrates of an example of a measuring head; and
Figure 8 illustrates an example of a flow chart of the method.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

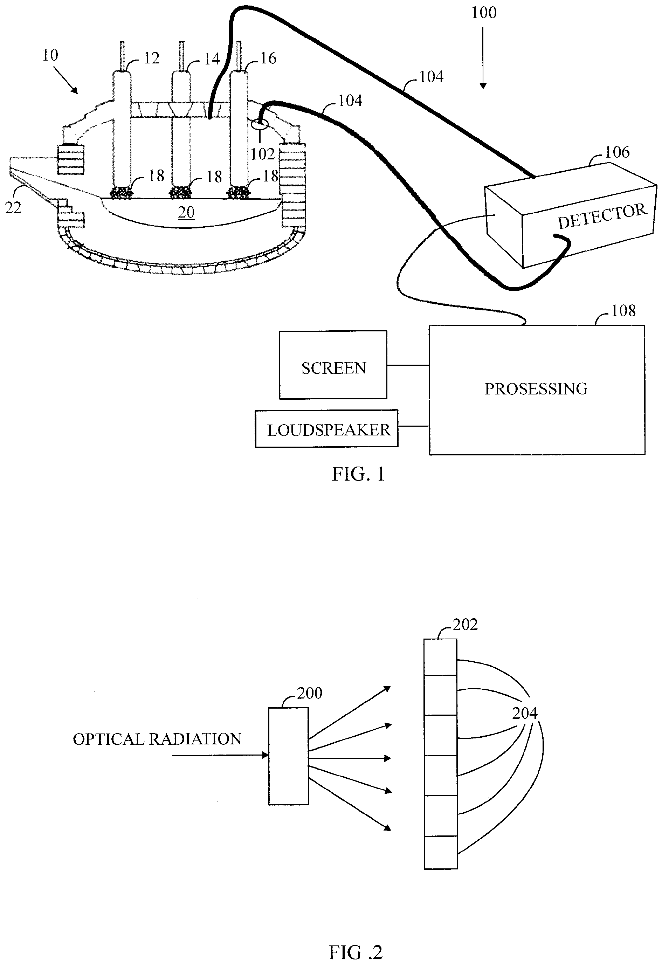

Figure 1 presents an electric arc furnace 10 and a measuring device 100 which comprises an optical cable 104, a detector 106 and a processing unit 108. The furnace 10 may comprise electrodes 12, 14, 16 for forming the electric arcs 18 and a tapping spout 22 for pouring the molten material out of the furnace 10. In general case, the number of optical cables 104 is not limited to one but there may be a plurality of optical cables 104 in use. An end 102 of each of the at least one optical cable 104 may be placed inside the electric arc furnace 10. Each end 102 then collects light from the furnace 10 into the at least one optical cable 104.

Material 20 comprising metal may be molten in a melting process of the electric arc furnace 10. Usually the purpose is that the metal of the material 20 is turned in a liquid form by heating. The temperature may vary from hundreds of degrees to more than thousand degrees of centigrade. The material 20 may comprise metal or ore. The metal of the material 20 may comprise iron, steel, copper, aluminum, chromium, nickel, some combination of them or the like. The metallic material 20 may also come from recycling.

Each of the at least one optical cable 104 convey the light from the furnace 10 to the detector 106. The detector 106 detects optical radiation within a wavelength region 250 nm to 1000 nm. The region the detector 106 detects may be 300 nm to 700 nm, for example, without restricting to that. The detector 106 may disperse the light conveyed by the at least one optical cable 104 into a spectrum and transform strengths of a plurality of optical bands of the spectrum into electrical data. Strength may mean an intensity of a power of the optical radiation.

As shown in Figure 2, the detector 106 may comprise a dispersing element 200 such as a prism or a grating. The dispersing element 200 may refract or reflect different wavelengths of the light to different angles such that different optical bands are directed to different detecting elements 204 of the sensor array 202 of the detector 106. Each detecting element 204 transforms an optical band hitting the detecting element 204 into electric signal carrying information about the strength of the optical band.

In an embodiment, the detector 106 may be designed such that each optical band hitting a detecting element 204 is narrower than 5 nm, for example, without limiting to this value. In an embodiment, the bandwidth of an optical band may be 0.1 or 0.2 nm, for example. The detector 106 may comprise a spectrometer for performing the detections of the optical bands.

Instead of dispersing the light, the light may be separated into a plurality of optical bands without the prism or the grating. The separation may be performed by optical filtering. The optical filtering may be performed using beam splitters which split the light into plurality of separate beams and using optical pass band filters which have different pass bands to filter different beams. The filters may be notch filters the bandwidth of which is less than 5 nm. The filters may be integrated with the beam splitters such that they are not mechanically separable from each other.

In an embodiment, the detector 106 may have a two dimensional sensor array 202 such that the detector 106 may capture a real image from the inside of the furnace 10. The image may be used to find out where different spectrums actually come from. In this way, it is also possible to know what percentage of the monitored object is electric arc, for example.

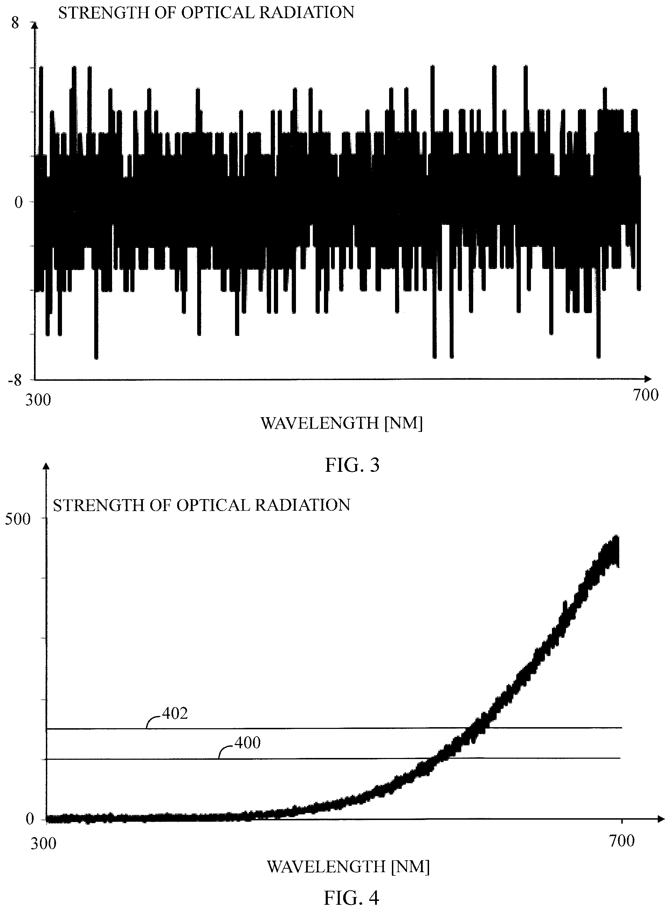

Figure 3 presents a spectrum of light gathered from a material still in solid form in the electric arc furnace 10 by an optical cable 104. The y-axis refers to the strength of optical radiation in an arbitrary scale and the x-axis refers to wavelength. Since the material has not molten yet, it is rather cold and that is why the signal appears weak and rather random due to noise. Hence, the strength of the random variation between neighboring optical bands is of the order of the maximum amplitude.

Figure 4 presents a spectrum of light gathered from a molten material in the electric arc furnace 10 by an optical cable 104. The y-axis refers to the strength of optical radiation in an arbitrary scale and the x-axis refers to wavelength. Since the material has molten, it is rather hot and that is why its signal becomes strong particularly towards the infrared. Furthermore, the curve in Figure 4 follows to certain extent black body radiation. In this kind of case, random variation between neighboring optical bands is much smaller than the deterministic tendency following more or less the black body radiation as a function of wavelength.

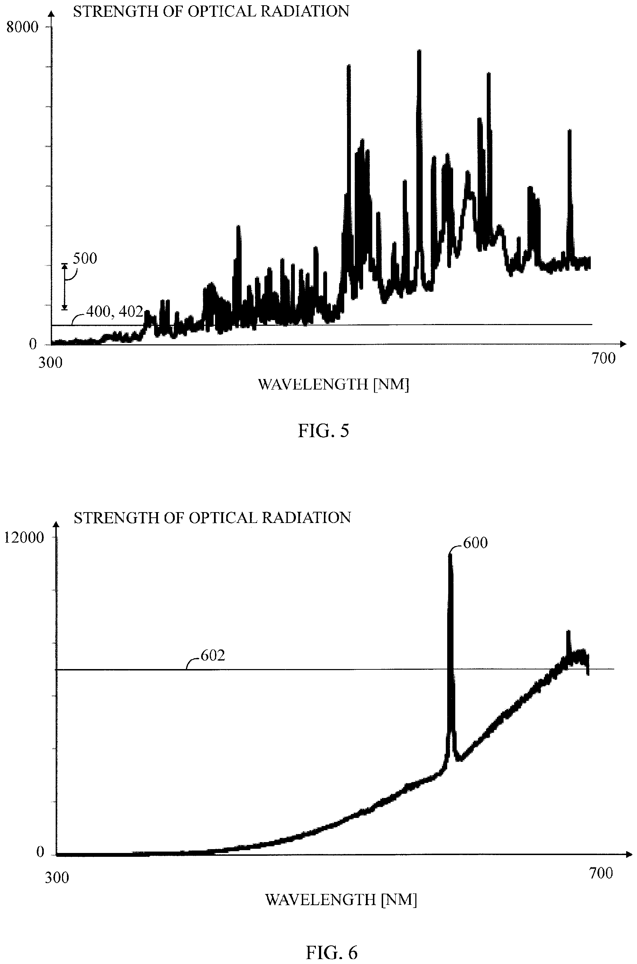

Figure 5 presents a spectrum of light gathered from an electric arc which is in the line-of-sight of an optical cable 104. The y-axis refers to the strength of optical radiation in an arbitrary scale and the x-axis refers to wavelength. Since the electric arc is hot, the signal is strong and it has large average deviation of the strengths of the optical bands.

Figure 6 presents a spectrum of light gathered from the molten material in the furnace an optical cable 104. The y-axis refers to the strength of optical radiation in an arbitrary scale which is the common to Figures 3 to 6 and the x-axis refers to wavelength. In certain conditions when the material is molten, a peak 600 at about 589 nm appears. If the peak is strong enough i.e. above a predetermined value 602 which may be defined as a double of the background, it gives a clear sign that the slag may foam if the material is tapped out of the furnace. The predetermined value may be set on the basis of experience, for example. In Figure 6, the predetermined value may be about 7000.

The processing unit 108 distinguishes a state or a transition between states of the furnace 10.

The processing unit 108 observers a state of the furnace 10 on the basis of the electric signal comprising information on the strengths of the optical bands from the detector. The state may imply whether the material has molten, whether slag has risen or whether there is a possibility of slag foaming, for example. The processing unit 108 measures background of the optical bands in a predetermined manner, at least one characteristic strength level of the optical bands, and an average deviation of the strengths of the optical bands from the background on the basis of the electrical data. Whether all metal has molten, position of slag and foaming of slag, are important but missing features in the prior art.

The processing unit 108 may measure the background using a known function of ROOT library the author of which is Miroslav Morhac, Institute of Physics, Slovak Academy of Sciences, Bratislava, Slovakia. The function performs advanced spectra processing and is class TSpectrum. which is published on the Internet: http://root.cern.ch/root/html532/TSpectrum.html.

In an embodiment, the processing unit 108 may measure at least one characteristic strength level of the optical bands by searching for a maximum value from the strengths of the optical bands. The maximum value may be the absolute maximum value in the whole region the detector 106 detects. Alternatively, the maximum value may be the maximum strength in a predetermined group of optical bands. Instead of searching for only one maximum value, a plurality of local or absolute maximums may be searched for in a predetermined manner.

In an embodiment, the at least one characteristic strength level may be an average or a mean of the strengths of the optical bands instead of a maximum. Also in this example the group for calculating the average or the mean may not include all optical bands but only a predetermined group. For example, the predetermined group in both of the above mentioned embodiments may comprise all other optical bands except the optical band which includes the wavelength of 589 nm.

In an embodiment, the processing unit 108 may also perform signal and data processing by filtering the signals and data, for instance. In an embodiment, the processing unit 108 measures the characteristic strength level by determining a difference between at least one local maximum strength and the background. The background may be measured in an environment excluding the at least one local maximum strength for determining the state of the furnace on the basis of the difference. The excluded maximum may be in the optical band including the wavelength 589 nm. This measurement refers to local or absolute peaks in the spectrum.

In an embodiment, the processing unit 108 may observe a state of the furnace where the at least one characteristic strength level is below a first predetermined level threshold 400. The first predetermined level may be set on the basis of experience, for example. When the processing unit 108 observes such a state, the processing unit 108 or some other unit may indicate that at least a part of the material has not molten and solid material is in the sight of the at least one optical cable. The first predetermined level threshold in Figures 3 to 6 may be 100, for example.

If the at least one characteristic strength level is below the first predetermined level threshold, the processing unit 108 may additionally check if the average deviation of the strengths of the optical bands from a background is in the order of the characteristic strength level or less. If the average deviation is that small, the processing unit 108 or some other unit may indicate that at least a part of the material has not molten and solid material is in the sight of the at least one optical cable.

The processing unit 108 may observe a state where the characteristic strength level is above a second predetermined level threshold 402. The first and the second predetermined level thresholds 400, 402 may have the same or different values. The second predetermined level threshold 402 may be 150 in Figures 3 to 6, for example. The processing unit 108 or some other unit may indicate that the material has molten and slag is in the sight of the at least one optical cable, if the characteristic strength level is above a second predetermined level threshold 402. The first and the second predetermined level thresholds 400, 402 may be set on the basis of experience.

In an embodiment, the processing unit 108 may additionally observe a state where the average deviation of the strengths of the optical bands from the background is less than the order of the characteristic strength level for enabling the processing unit 108 or some other unit to indicate that the material has molten and slag is in the sight of the at least one optical cable.

In an embodiment, the processing unit 108 may observe a state where the average deviation of the strengths of the optical bands from the background is larger than a predetermined deviation threshold 500. The deviation threshold defines a limit above which an electric arc is assumed to be in sight. If said state is observed, the processing unit 108 or some other unit may indicate that the material has molten and at least one electric arc is in sight of the at least one optical cable. The predetermined deviation threshold may be determined on the basis of experience, for example. The value of the predetermined deviation threshold is 1000 in Figures 3 to 6.

In an embodiment, the processing unit 108 may observe a state where the strengths of the optical bands match to a black body radiation within a predetermined deviation range 500 at or above a melting point of the material for enabling the processing unit 108 or some other unit to indicate that the metal has molten. The temperature of the furnace may be measured using a separate thermometer.

In an embodiment, the processing unit 108 may observe a state where the strengths of the optical bands match to a black body radiation but the average deviation of the strengths of the optical radiation is larger than the predetermined deviation range 500 at or above a melting point of the material. If the said state is observed, the processing unit 108 or some other unit to may indicate that the metal has molten and at least one electric arc is in sight of the at least one optical. The temperature of the furnace may be measured using a separate thermometer.

In an embodiment, the processing unit 108 or some other unit may observe a change from a state to another state. The processing unit 108 or some other unit may observe a change from the state where the average deviation of the strengths of the optical bands from the background is larger than the order of the characteristic strength level to the state where the average deviation of the strengths of the optical bands from the background is smaller than a predetermined deviation threshold. That the peaks become less intense may mean that a visibility of an electric arc decreases. That may mean that slag is rising and obscuring the visibility. Thus, if the change between states is observed, the processing unit 108 or some other unit may indicate that slag has risen to obscure the at least one electric arc and that there is a possibility of slag foaming during tapping of the molten material.

In an embodiment the at least one end 102 of the at least one optical cable 104 is directed at an electric arc 18. Then the processing unit 108 or some other unit may have a capability of indicating that slag is in a line-of-sight between the one or more ends 102 of the at least one optical cable 104 and the at least one electric arc 18 if such a state is observed.

In an embodiment, the processing unit 108 may observe a state where a strength of an optical band including wavelength 589 nm is higher than the background by more than a predetermined value 602. If said state is observed, the processing unit 108 or some other unit may indicate that there is an increased possibility of slag foaming during tapping of the molten material.

In an embodiment, the processing unit 108 may determine a deviation of the strength of the optical band including wavelength 589 nm from the background as a coefficient of a Voigt function. The Voight function is known *per se.*

In an embodiment, the detector 106 may detect the at least one optical band during the at least one electric arc 18 is switched off for the processing unit 108 to determine the strength of the optical band including wavelength 589 nm.

In an embodiment, the processing unit 108 may form the background on the basis of measured strengths, form at least one absolute difference between the background and measured strengths in the optical bands, divide the at least one absolute difference by the background and sum together the divided differences. This method can be understood to include also the possibility that an average of the at least one difference is formed and the average value is then divided by the background. Then the processing unit 108 may distinguish a state where a sum of the divided differences is less than a predetermined difference threshold. Particularly when the electric arc is not visible any longer, the processing unit 108 may indicate that there is an increased possibility of slag foaming during tapping of the molten material. The electric arc may not be visible in a state where strength of an optical band including wavelength 589 nm is higher than the background, for example. When there are no other clearly distinguishable peaks than the peak at 589 nm, it is rather probable that the electric arc is not visible for the measurement. The indication may also be performed by some other unit having the information. The difference threshold may be determined on the basis of experience.

The processing unit 108 may comprise at least one processor; and at least one memory including computer program code. The at least one memory, the at least one processor and the computer program code cause the processing unit 108 at least to measure, for determining a state of the furnace 10, a background of the optical bands in a predetermined manner, at least one characteristic strength level of the optical bands and an average deviation of the strengths of the optical bands from the background on the basis of electrical data from the detector 106.

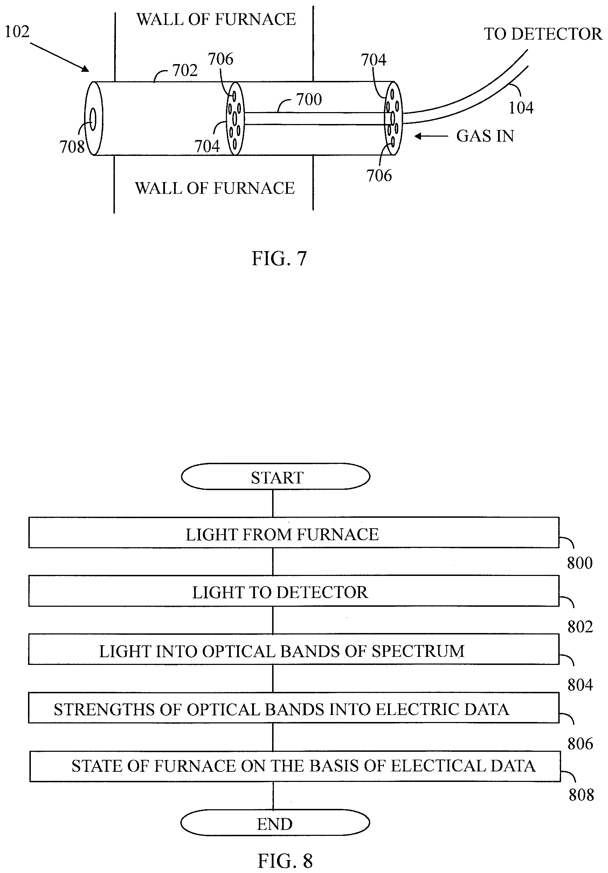

Figure 7 shows an example of the end 102 of an optical cable 104. One or more optical fibers 700 are inside a stainless steel pipe 702. The pipe 702 may have an inner diameter of few centimeters. The one or more optical fibers 700 are kept in the middle of the pipe 702 by holders 704. The holders 704 have holes 706 such that gas may flow through the pipe 702. In the front of the end 102 there is an aperture 708 for the optical radiation and for the gas. The pipe 702 and particularly the one or more optical fibers 700 are kept cool in the high heat of the furnace 10 by blowing gas through the pipe 702 and through the aperture to the furnace 10. The gas may comprise air or argon, for instance. Optical radiation from the furnace 10 passes through the aperture 708 and enters the one or more optical fibers 700. The aperture 708 may have a diameter of a few millimeters.

The indication of a state of the furnace may be performed using means of presentation. The means of presentation may comprise a screen capable of providing images for a user and/or a loudspeaker or other audio device capable of providing sound for a user. The screen may be similar to a television screen.

Figure 8 illustrates a flow chart of the method. In step 800, light from the furnace is collected into the at least one optical cable by each end of at least one optical cable, each end being placable inside the electric arc furnace of a melting process of meltable material comprising metal. In step 802, the light is conveyed to the detector by each of the at least one optical cable. In step 804 the light conveyed by the at least one optical cable is separate into a plurality of optical bands of spectrum in the detector. In step 806, strengths of the plurality of optical bands are transformed into electrical data by the detector. In step 808, a background of the optical bands, at least one characteristic strength level of the optical bands and an average deviation of the strengths of the optical bands from the background are measured in a predetermined manner on the basis of the electrical data by a processing unit for determining a state of the furnace.

In an embodiment, the device implementing aspects of the above solution may partly be realized as software, or computer program or programs in a processing system.

In an embodiment, the apparatus implementing aspects of the above solution may be realized as software in the detector 106 and the processing unit 108. The processing unit 108 may at least partly be a server connected to the detector 106 through the Internet. The server may be a computer or a set of computers of a web service system.

The computer programs may be in a source code form, object code form, or in some intermediate form, and it may be stored in some sort of carrier, which may be any entity or device capable of carrying the program. Such carriers include a record medium, computer memory, read-only memory, and software distribution package, for example. Depending on the processing power needed, the computer program may be executed in a single electronic digital controller or it may be distributed amongst a number of controllers.

It will be obvious to a person skilled in the art that, as technology advances, the inventive concept can be implemented in various ways. The invention and its embodiments are not limited to the examples described above but may vary within the scope of the claims.

## Claims

1. An apparatus for monitoring an electric arc furnace, the apparatus comprising at least one optical cable (104), a detector (106) and a processing unit (108);
an end (102) of each of the at least one optical cable (104) being placable inside the electric arc furnace (10) of a melting process of meltable material (20) comprising metal and being configured to collect light from the furnace (10) into the at least one optical cable (104);
each of the at least one optical cable (104) being configured to convey the light to the detector (106);
the detector (106) being configured to separate the light conveyed by the at least one optical cable (104) into a plurality of optical bands of spectrum and transform strengths of the plurality of optical bands into electrical data;
the processing unit (108) being configured to measure a background of the optical bands in a predetermined manner, at least one characteristic strength level of the optical bands and an average deviation of the strengths of the optical bands from the background on the basis of the electrical data transmitted by the detector (106), and determine a state or a transition between states of the furnace (10) and indicate, using means of presentation, whether the material (20) has molten on the basis of the measurement.

2. The apparatus of claim 1, wherein the detector is configured to detect optical radiation within a wavelength region 250 nm to 1000 nm, each optical band of the detector (106) in the wavelength region having a bandwidth narrower than 5 nm.

3. The apparatus of any preceding claim, wherein the processing unit (108) is configured to measure strengths of the plurality of optical bands, and measure a characteristic strength level by determining a difference between at least one local maximum strength and the background for determining the state of the furnace (10) on the basis of the difference.

4. The apparatus of claim 1, wherein the processing unit (108) is configured to determine a state of the furnace (10) where the at least one characteristic strength level is below a first predetermined level threshold for enabling the apparatus to indicate that at least a part of the material (20) has not molten and solid material is in the sight of the at least one optical cable (104).

5. The apparatus of claim 1, wherein the processing unit (108) is configured to measure a state where the characteristic strength level is above a second predetermined level threshold for enabling the apparatus to indicate that the material (20) has molten and slag is in the sight of the at least one optical cable (104).

6. The apparatus of claim 5, wherein the processing unit (108) is additionally configured to measure a state where the average deviation of the strengths of the optical bands from a background is less than the order of the characteristic strength level for enabling the apparatus to indicate that the material (20) has molten and slag is in the sight of the at least one optical cable (104).

7. The apparatus of claim 5, wherein the processing unit (108) is additionally configured to measure a state where the average deviation of the strengths of the optical bands from the background is larger than a predetermined deviation threshold for enabling the apparatus to indicate that the material (20) has molten and at least one electric arc (18) is in sight of the at least one optical cable (104).

8. The apparatus of claim 1, wherein the processing unit (108) is configured to determine a change from a state where the average deviation of the strengths of the optical bands from the background is larger than a predetermined deviation threshold to a state where the average deviation of the strengths of the optical bands from a background is less than the order of the characteristic strength level for enabling the apparatus to indicate that slag has risen to obscure the at least one electric arc (18) and that there is a possibility of slag foaming during tapping of the molten material.

9. The apparatus of claim 6, wherein the at least one end (102) of the at least one optical cable (104) is directed at an electric arc (18), and the apparatus is configured to indicate that slag is in a line-of-sight between the one or more ends of the at least one optical cable (104) and the at least one electric arc (18).

10. The apparatus of claim 1, wherein the processing unit (108) is configured to determine a state where a strength of an optical band including wavelength 589 nm is higher than the background by more than a predetermined value for enabling the apparatus to indicate that there is an increased possibility of slag foaming during tapping of the molten material.

11. The apparatus of claim 10, wherein the processing unit (108) is configured to determine a deviation of the strength of the optical band including wavelength 589 nm from the background as a coefficient of a Voigt function.

12. The apparatus of claim 10, wherein the detector (106) is configured to detect the at least one optical band during the at least one electric arc (18) is switched off for the processing unit to determine the strength of the optical band including wavelength 589 nm.

13. The apparatus of claim 1 or 8, wherein the processing unit (108) is configured to form the background on the basis of measured strengths, form at least one absolute difference between the background and measured strengths in the optical bands, divide the at least one absolute difference by the background and sum together the divided differences, and determine a state where a sum of the divided differences is less than a predetermined difference threshold for enabling the apparatus to indicate that there is an increased possibility of slag foaming during tapping of the molten material.

14. The apparatus of claim 1, wherein the processing unit (108) comprises
at least one processor; and
at least one memory including computer program code,
the at least one memory, the at least one processor and the computer program code being configured to cause the processing unit (108) at least to measure a background of the optical bands in a predetermined manner, at least one characteristic strength level of the optical bands and an average deviation of the strengths of the optical bands from the background on the basis of the electrical data transmitted by the detector (106), and determine a state or a transition between states of the furnace (10) and indicate, using means of presentation, whether the material (20) has molten on the basis of the measurement.

15. A method for monitoring an electric arc furnace, the method comprising:
collecting (800) light from the furnace (10) into at least one optical cable (104) by at least one end (102) of the at least one optical cable (104), each end (102) being placable inside the electric arc furnace (10) of a melting process of meltable material (20) comprising metal and;
conveying (802) by each of the at least one optical cable (104) the light to a detector (106);
separating (804), in an detector (106), the light conveyed by the at least one optical cable (104) into a plurality of optical bands of spectrum;
transforming (806) strengths of the plurality of optical bands into electrical data; and
by a processing unit (108), measuring (808) a background of the optical bands in a predetermined manner, at least one characteristic strength level of the optical bands and an average deviation of the strengths of the optical bands from the background on the basis of the electrical data transmitted by the detector (106), determining a state or a transition between states of the furnace (10) and indicating, using means of presentation, whether the material (20) has molten on the basis of the measurement.

16. A computer readable medium comprising instructions which, when executed by the processing unit (108) of the apparatus of claim 1, cause the processing unit (108) to carry out the steps of claim 15.

## Patentansprüche

1. Vorrichtung zum Überwachen eines Lichtbogenofens, wobei die Vorrichtung mindestens ein optisches Kabel (104), einen Detektor (106) und eine Verarbeitungseinheit (108) umfasst;
ein Ende (102) eines jeden des mindestens einen optischen Kabels (104) innerhalb des Lichtbogenofens (10) eines Schmelzprozesses von schmelzbarem Material (20), das Metall umfasst, platziert werden kann und zum Sammeln von Licht aus dem Ofen (10) in das mindestens eine optische Kabel (104) ausgelegt ist;
jedes des mindestens einen optischen Kabels (104) zum Befördern des Lichts zum Detektor (106) ausgelegt ist;
der Detektor (106) zum Trennen des Lichts, das durch das mindestens eine optische Kabel (104) befördert wird, in eine Mehrzahl von optischen Spektralbändern und Umwandeln von Stärken der Mehrzahl von optischen Bändern in elektrische Daten ausgelegt ist;
die Verarbeitungseinheit (108) so ausgelegt ist, dass sie einen Hintergrund der optischen Bänder auf eine vorbestimmte Weise, mindestens einen charakteristischen Stärkepegel der optischen Bänder und eine mittlere Abweichung der Stärken der optischen Bänder vom Hintergrund auf der Basis der durch den Detektor (106) gesendeten elektrischen Daten misst und einen Zustand oder einen Übergang zwischen Zuständen des Ofens (10) bestimmt und auf der Basis der Messung unter Verwendung von Darstellungsmitteln anzeigt, ob das Material (20) geschmolzen ist.

2. Vorrichtung nach Anspruch 1, wobei der Detektor so ausgelegt ist, dass er optische Strahlung innerhalb einer Wellenlängenregion von 250 nm bis 1000 nm detektiert, wobei jedes optische Band des Detektors (106) in der Wellenlängenregion eine Bandbreite aufweist, die schmaler als 5 nm ist.

3. Vorrichtung nach einem der vorhergehenden Ansprüche, wobei die Verarbeitungseinheit (108) so ausgelegt ist, dass sie Stärken der Mehrzahl von optischen Bändern misst und einen charakteristischen Stärkepegel durch Bestimmen einer Differenz zwischen mindestens einer lokalen maximalen Stärke und dem Hintergrund zum Bestimmen des Zustands des Ofens (10) auf der Basis der Differenz misst.

4. Vorrichtung nach Anspruch 1, wobei die Verarbeitungseinheit (108) so ausgelegt ist, dass sie einen Zustand des Ofens (10) bestimmt, in welchem der mindestens eine charakteristische Stärkepegel unter einer ersten vorbestimmten Pegelschwelle liegt, um die Vorrichtung zum Anzeigen zu befähigen, dass mindestens ein Teil des Materials (20) nicht geschmolzen ist und Feststoffmaterial in der Sicht des mindestens einen optischen Kabels (104) ist.

5. Vorrichtung nach Anspruch 1, wobei die Verarbeitungseinheit (108) so ausgelegt ist, dass sie einen Zustand misst, in welchem der charakteristische Stärkepegel über einer zweiten vorbestimmten Pegelschwelle liegt, um die Vorrichtung zum Anzeigen zu befähigen, dass das Material (20) geschmolzen ist und Schlacke in der Sicht des mindestens einen optischen Kabels (104) ist.

6. Vorrichtung nach Anspruch 5, wobei die Verarbeitungseinheit (108) außerdem so ausgelegt ist, dass sie einen Zustand misst, in welchem die mittlere Abweichung der Stärken der optischen Bänder von einem Hintergrund kleiner als die Größenordnung des charakteristischen Stärkepegels ist, um die Vorrichtung zum Anzeigen zu befähigen, dass das Material (20) geschmolzen ist und Schlacke in der Sicht des mindestens einen optischen Kabels (104) ist.

7. Vorrichtung nach Anspruch 5, wobei die Verarbeitungseinheit (108) außerdem so ausgelegt ist, dass sie einen Zustand misst, in welchem die mittlere Abweichung der Stärken der optischen Bänder vom Hintergrund größer als eine vorbestimmte Abweichungsschwelle ist, um die Vorrichtung zum Anzeigen zu befähigen, dass das Material (20) geschmolzen ist und mindestens ein Lichtbogen (18) in der Sicht des mindestens einen optischen Kabels (104) ist.

8. Vorrichtung nach Anspruch 1, wobei die Verarbeitungseinheit (108) so ausgelegt ist, dass sie einen Wechsel von einem Zustand, in welchem die mittlere Abweichung der Stärken der optischen Bänder vom Hintergrund größer als eine vorbestimmte Abweichungsschwelle ist, in einen Zustand bestimmt, in welchem die mittlere Abweichung der Stärken der optischen Bänder von einem Hintergrund kleiner als die Größenordnung des charakteristischen Stärkepegels ist, um die Vorrichtung zum Anzeigen zu befähigen, dass die Schlacke so angestiegen ist, dass der mindestens eine Lichtbogen (18) verdunkelt wird und dass eine Möglichkeit von Schlackenschäumung während des Abstechens des geschmolzenen Materials besteht.

9. Vorrichtung nach Anspruch 6, wobei das mindestens eine Ende (102) des mindestens einen optischen Kabels (104) an einen elektrischen Bogen (18) gerichtet ist, und die Vorrichtung so ausgelegt ist, dass sie anzeigt, dass Schlacke in einer Sichtlinie zwischen dem einen oder den mehreren Enden des mindestens einen optischen Kabels (104) und dem mindestens einen Lichtbogen (18) ist.

10. Vorrichtung nach Anspruch 1, wobei die Verarbeitungseinheit (108) so ausgelegt ist, dass sie einen Zustand bestimmt, in welchem eine Stärke eines optischen Bandes mit einer Wellenlänge von 589 nm um mehr als einen vorbestimmten Wert höher als der Hintergrund ist, um die Vorrichtung zum Anzeigen zu befähigen, dass eine erhöhte Möglichkeit von Schlackenschäumung während des Abstechens des geschmolzenen Materials besteht.

11. Vorrichtung nach Anspruch 10, wobei die Verarbeitungseinheit (108) so ausgelegt ist, dass sie eine Abweichung der Stärke des optischen Bandes mit einer Wellenlänge von 589 nm vom Hintergrund als einen Koeffizienten einer Voigt-Funktion bestimmt.

12. Vorrichtung nach Anspruch 10, wobei der Detektor (106) so ausgelegt ist, dass er das mindestens eine optische Band detektiert, während der mindestens eine Lichtbogen (18) ausgeschaltet wird, damit die Verarbeitungseinheit die Stärke des optischen Bandes mit einer Wellenlänge von 589 bestimmt.

13. Vorrichtung nach Anspruch 1 oder 8, wobei die Verarbeitungseinheit (108) so ausgelegt ist, dass sie den Hintergrund auf der Basis von gemessenen Stärken bildet, mindestens eine absolute Differenz zwischen dem Hintergrund und den gemessenen Stärken in den optischen Bändern bildet, die mindestens eine absolute Differenz durch den Hintergrund teilt und die geteilten Differenzen miteinander summiert und einen Zustand bestimmt, in welchem eine Summe der geteilten Differenzen kleiner als eine vorbestimmte Differenzschwelle ist, um die Vorrichtung zum Anzeigen zu befähigen, dass eine erhöhte Möglichkeit von Schlackenschäumung während des Abstechens des geschmolzenen Materials besteht.

14. Vorrichtung nach Anspruch 1, wobei die Verarbeitungseinheit (108) umfasst:
mindestens einen Prozessor und
mindestens einen Speicher, der Computerprogrammcode umfasst,
wobei der mindestens eine Speicher, der mindestens eine Prozessor und der Computerprogrammcode so ausgelegt sind, dass sie die Verarbeitungseinheit (108) zumindest veranlassen, einen Hintergrund der optischen Bänder auf eine vorbestimmte Weise, mindestens einen charakteristischen Stärkepegel der optischen Bänder und eine mittlere Abweichung der Stärken der optischen Bänder vom Hintergrund auf der Basis der durch den Detektor (106) gesendeten Daten zu messen und einen Zustand oder einen Übergang zwischen Zuständen des Ofens (10) zu bestimmen und auf der Basis der Messung unter Verwendung von Darstellungsmitteln anzuzeigen, ob das Material (20) geschmolzen ist.

15. Verfahren zur Überwachung eines Lichtbogenofens, wobei das Verfahren aufweist:
Sammeln (800) von Licht aus dem Ofen (10) in mindestens ein optisches Kabel (104) durch mindestens ein Ende (102) des mindestens einen optischen Kabels (104), wobei jedes Ende (102) innerhalb des Lichtbogenofens (10) eines Schmelzprozesses von schmelzbarem Material (20), das Metall umfasst, platziert werden kann; und
Befördern (802) des Lichts zu einem Detektor (106) durch jedes des mindestens einen optischen Kabels (104);
Trennen (804) des Lichts, das durch das mindestens eine optische Kabel (104) befördert wird, in einem Detektor (106) in eine Mehrzahl von optischen Spektralbändern;
Umwandeln (806) von Stärken der Mehrzahl von optischen Bändern in elektrische Daten; und
Messen (808) eines Hintergrunds der optischen Bänder auf eine vorbestimmte Weise, mindestens eines charakteristischen Stärkepegels der optischen Bänder und einer mittleren Abweichung der Stärken der optischen Bänder vom Hintergrund auf der Basis der durch den Detektor (106) gesendeten Daten und Bestimmen eines Zustands oder eines Übergangs zwischen Zuständen des Ofens (10) und Anzeigen auf der Basis der Messung unter Verwendung von Darstellungsmitteln, ob das Material (20) geschmolzen ist, durch eine Verarbeitungseinheit (108).

16. Computerlesbares Medium mit Anweisungen, die bei Ausführung durch die Verarbeitungseinheit (108) der Vorrichtung nach Anspruch 1 die Verarbeitungseinheit (108) zum Ausführen der Schritte nach Anspruch 15 veranlassen.

## Revendications

1. Appareil pour contrôler un four à arc électrique, l'appareil comprenant au moins un câble optique (104), un détecteur (106) et une unité de traitement (108) ;
une extrémité (102) de chacun des au moins un câble optique (104) peut être placée à l'intérieur du four à arc électrique (10) d'un processus de fusion d'un matériau fusible (20) comprenant du métal et est configurée pour collecter la lumière provenant du four (10) dans l'au moins un câble optique (104) ;
chacun des au moins un câble optique (104) est configuré pour transporter la lumière vers le détecteur (106) ;
le détecteur (106) est configuré pour séparer la lumière transportée par l'au moins un câble optique (104) en une pluralité de bandes optiques du spectre et transformer des forces de la pluralité de bandes optiques en données électriques ;
l'unité de traitement (108) est configurée pour mesurer un fond des bandes optiques d'une manière prédéterminée, au moins un niveau de force caractéristique des bandes optiques et un écart moyen des forces des bandes optiques par rapport au fond sur la base des données électriques transmises par le détecteur (106), et déterminer un état ou une transition entre des états du four (10) et indiquer, en utilisant un moyen de présentation, si le matériau (20) est en fusion sur la base de la mesure.

2. Appareil selon la revendication 1, dans lequel le détecteur est configuré pour détecter un rayonnement optique dans une région de longueur d'onde de 250 nm à 1000 nm, chaque bande optique du détecteur (106) dans la région de longueur d'onde ayant une bande passante plus étroite que 5 nm.

3. Appareil selon l'une quelconque des revendications précédentes, dans lequel l'unité de traitement (108) est configurée pour mesurer des forces de la pluralité de bandes optiques, et mesurer un niveau de force caractéristique en déterminant une différence entre au moins une force maximale locale et le fond pour déterminer l'état du four (10) sur la base de la différence.

4. Appareil selon la revendication 1, dans lequel l'unité de traitement (108) est configurée pour déterminer un état du four (10) où l'au moins un niveau de force caractéristique est en-dessous d'un premier seuil de niveau prédéterminé pour permettre à l'appareil d'indiquer qu'au moins une partie du matériau (20) n'est pas en fusion et qu'un matériau solide est à la vue de l'au moins un câble optique (104).

5. Appareil selon la revendication 1, dans lequel l'unité de traitement (108) est configurée pour mesurer un état où le niveau de force caractéristique est au-dessus d'un second seuil de niveau prédéterminé pour permettre à l'appareil d'indiquer que le matériau (20) est en fusion et que du laitier est à la vue de l'au moins un câble optique (104).

6. Appareil selon la revendication 5, dans lequel l'unité de traitement (108) est également configurée pour mesurer un état où l'écart moyen des forces des bandes optiques rapport à un fond est inférieur à l'ordre du niveau de force caractéristique pour permettre à l'appareil d'indiquer que le matériau (20) est en fusion et que du laitier est à la vue de l'au moins un câble optique (104).

7. Appareil selon la revendication 5, dans lequel l'unité de traitement (108) est également configurée pour mesurer un état où l'écart moyen des forces des bandes optiques par rapport au fond est supérieur à un seuil d'écart prédéterminé pour permettre à l'appareil d'indiquer que le matériau (20) est en fusion et qu'au moins un arc électrique (18) est à la vue de l'au moins un câble optique (104).

8. Appareil selon la revendication 1, dans lequel l'unité de traitement (108) est configurée pour déterminer un changement d'un état où l'écart moyen des forces des bandes optiques par rapport au fond est supérieur à un seuil d'écart prédéterminé vers un état où l'écart moyen des forces des bandes optiques par rapport à un fond est inférieur à l'ordre du niveau de force caractéristique pour permettre à l'appareil d'indiquer que du laitier s'est élevé pour obscurcir l'au moins un arc électrique (18) et qu'il y a une possibilité d'une expansion de laitier pendant la coulée du matériau en fusion.

9. Appareil selon la revendication 6, dans lequel l'au moins une extrémité (102) de l'au moins un câble optique (104) est dirigée vers un arc électrique (18), et l'appareil est configuré pour indiquer que du laitier est en visibilité directe entre les une ou plusieurs extrémités de l'au moins un câble optique (104) et l'au moins un arc électrique (18).

10. Appareil selon la revendication 1, dans lequel l'unité de traitement (108) est configurée pour déterminer un état où une force d'une bande optique comportant une longueur d'onde de 589 nm est supérieure au fond par plus d'une valeur prédéterminée pour permettre à l'appareil d'indiquer qu'il y a une possibilité accrue d'expansion de laitier pendant la coulée du matériau en fusion.

11. Appareil selon la revendication 10, dans lequel l'unité de traitement (108) est configurée pour déterminer un écart de la force de la bande optique comportant une longueur d'onde de 589 nm par rapport au fond comme coefficient d'une fonction de Voigt.

12. Appareil selon la revendication 10, dans lequel le détecteur (106) est configuré pour détecter l'au moins une bande optique pendant que l'au moins un arc électrique (18) est éteint pour que l'unité de traitement détermine la force de la bande optique comportant une longueur d'onde de 589 nm.

13. Appareil selon la revendication 1 ou 8, dans lequel l'unité de traitement (108) est configurée pour former le fond sur la base de forces mesurées, former au moins une différence absolue entre le fond et des forces mesurées dans les bandes optiques, diviser l'au moins une différence absolue par le fond et additionner entre elles les différences divisées, et déterminer un état où une somme des différences divisées est inférieure à un seuil de différence prédéterminé pour permettre à l'appareil d'indiquer qu'il y a une possibilité accrue d'expansion de laitier pendant la coulée du matériau en fusion.

14. Appareil selon la revendication 1, dans lequel l'unité de traitement (108) comprend
au moins un processeur ; et
au moins une mémoire comportant un code de programme informatique,
l'au moins une mémoire, l'au moins un processeur et le code de programme informatique sont configurés pour amener l'unité de traitement (108) à au moins mesurer un fond des bandes optiques d'une manière prédéterminée, au moins un niveau de force caractéristique des bandes optiques et un écart moyen des forces des bandes optiques par rapport au fond sur la base des données électriques transmises par le détecteur (106), et déterminer un état ou une transition entre des états du four (10) et indiquer, en utilisant un moyen de présentation, si le matériau (20) est en fusion sur la base de la mesure.

15. Procédé pour contrôler un four à arc électrique, le procédé comprenant les étapes consistant à :
collecter (800) la lumière provenant du four (10) dans au moins un câble optique (104) par au moins une extrémité (102) de l'au moins un câble optique (104), chaque extrémité (102) pouvant être placée à l'intérieur du four à arc électrique (10) d'un processus de fusion d'un matériau fusible (20) comprenant du métal et ;
transporter (802) par chacun des au moins un câble optique (104) la lumière vers un détecteur (106) ;
séparer (804), dans un détecteur (106), la lumière transportée par l'au moins un câble optique (104) en une pluralité de bandes optiques du spectre ;
transformer (806) des forces de la pluralité de bandes optiques en données électriques ; et
par une unité de traitement (108), mesurer (808) un fond des bandes optiques d'une manière prédéterminée, au moins un niveau de force caractéristique des bandes optiques et un écart moyen des forces des bandes optiques par rapport au fond sur la base des données électriques transmises par le détecteur (106), déterminer un état ou une transition entre des états du four (10) et indiquer, en utilisant un moyen de présentation, si le matériau (20) est en fusion sur la base de la mesure.

16. Support lisible par ordinateur comprenant des instructions qui, lorsqu'elles sont exécutées par l'unité de traitement (108) de l'appareil selon la revendication 1, amènent l'unité de traitement (108) à mettre en œuvre les étapes de la revendication 15.
